# FASCICULE DE BREVET EUROPEEN

(11) **EP 3 707 074 B1**
(45) Date de publication et mention de la délivrance du brevet: **27.12.2023**
(21) Numéro de dépôt: 18819177.9
(22) Date de dépôt: 08.11.2018
(51) Int. Cl.: B64D 27/26, B23K 20/00

(54) **PROCÉDÉ DE FABRICATION DE PANNEAU STRUCTURAL ET/OU ACOUSTIQUE POUR NACELLE D'ENSEMBLE PROPULSIF D'AÉRONEF, ET DISPOSITIF S'Y RAPPORTANT**
VERFAHREN ZUR HERSTELLUNG EINER STRUKTURELLEN UND/ODER AKUSTISCHEN PLATTE FÜR EINE FLUGZEUGANTRIEBSGONDEL UND ZUGEHÖRIGE VORRICHTUNG
METHOD FOR MANUFACTURING A STRUCTURAL AND/OR ACOUSTIC PANEL FOR AN AIRCRAFT PROPULSION SYSTEM NACELLE, AND RELATED DEVICE

(30) Priorité: 08.11.2017 FR 1760487
(43) Date de publication de la demande: 16.09.2020
(73) Titulaire: Safran Nacelles, 76700 Gonfreville-l'Orcher (FR)
(72) Inventeur: BIENVENU, Philippe, 76700 Gonfreville L'Orcher (FR); SOULA, Aurelie, 76700 Gonfreville L'Orcher (FR); PERROTIN, Thomas, 76700 Gonfreville L'Orcher (FR)
(74) Mandataire: Germain Maureau
(86) Numéro de dépôt international: PCT/FR2018/052768
(87) Numéro de publication internationale: WO 2019/092371

(56) Documents cités:
- EP-A1- 0 876 899
- EP-A1- 2 879 830
- WO-A1-2016/062978
- US-A- 3 612 387
- US-A- 3 930 605
- US-A- 5 705 794
- US-A1- 2006 210 821
- US-A1- 2013 112 344
- MICHAL MIS ET AL: "Numerical Study of Radiation and Temperature Phenomena for Improved Super-Plastic Sheet Metal Forming", JOURNAL OF METASTABLE AND NANOCRYSTALLINE MATERIALS, vol. 735, 1 décembre 2012 (2012-12-01), pages 170-179, XP055457052, CH ISSN: 1422-6375, DOI: 10.4028/www.scientific.net/MSF.735.170

## Description

La présente invention se rapporte au domaine de la fabrication de pièces pour nacelle d'ensemble propulsif d'aéronef telle qu'une nacelle de turboréacteur d'avion. Plus spécifiquement, l'invention concerne un procédé de fabrication de panneau structural et/ou acoustique notamment pour tuyère d'éjection ou structure fixe interne d'une telle nacelle. L'invention concerne aussi un dispositif permettant de mettre en oeuvre un tel procédé.

Dans ce domaine, il est connu de mettre en oeuvre des panneaux structuraux communément appelés « panneaux sandwiches ». Un tel panneau comprend typiquement deux peaux et une structure alvéolaire reliant les deux peaux. Typiquement, la structure alvéolaire consiste en des cloisons transversales contribuant à la tenue structurale du panneau en assurant notamment la liaison entre les deux peaux et supportant des contraintes mécaniques et thermiques. Une telle structure alvéolaire permet de réduire la masse globale du panneau.

Un tel panneau peut en outre avoir une fonction de traitement acoustique afin d'atténuer le bruit généré par l'ensemble propulsif. Pour ce faire, les cloisons transversales de la structure alvéolaire sont agencées de manière à délimiter des alvéoles formant des cavités de Helmholtz. L'une des peaux, orientée vers la source du bruit, est perméable à l'air afin d'absorber l'énergie acoustique au sein de la structure alvéolaire.

Dans le présent document, l'expression « fabrication de panneau structural et/ou acoustique » désigne à la fois, d'une part, la fabrication du panneau structural et/ou acoustique en tant que tel, notamment par assemblage des peaux et de la structure alvéolaire et, d'autre part, la fabrication des peaux et de la structure alvéolaire, notamment par formage de ces éléments à assembler.

On connaît dans l'art antérieur des techniques d'assemblage de panneau structural et/ou acoustique par brasage ou par soudage diffusion. Le brasage consiste à chauffer à sa température de fusion un métal d'apport, qui peut prendre la forme d'une feuille de brasure ou d'une poudre ou d'un tape (poudre dans un liant organique). Typiquement, la feuille de brasure est placée entre une peau et la structure alvéolaire du panneau. Le métal d'apport est choisi de sorte que sa température de fusion soit inférieure à la température de fusion des éléments à assembler, c'est-à-dire dans cet exemple de la peau et de la structure alvéolaire. Contrairement au brasage, le soudage diffusion ne nécessite pas de métal d'apport.

Afin de disposer les éléments à assembler dans la configuration dans laquelle ils convient de les braser ou souder, il est connu d'appliquer une pression gazeuse permettant de plaquer et maintenir ces éléments dans une telle configuration.

Dans ces différentes techniques de l'art antérieur, l'assemblage est réalisé au sein d'une enceinte sous vide, ou four sous vide, dont la montée en température est généralement réalisée par des résistances électriques.

Le chauffage par résistances électriques est relativement long et peut nécessiter l'utilisation d'une cloche thermique pour limiter les gradients thermiques entre la peau interne et la peau externe, le chauffage se faisant généralement du côté de la peau externe.

D'autres inconvénients des techniques de l'art antérieur concernent l'impossibilité de moduler les températures sur les pièces et la durée importante d'un cycle de fabrication : les pièces sont généralement formées séparément puis assemblées par chauffage.

Par ailleurs, une structure fixe interne de nacelle présente généralement des surfaces non planes dont la forme peut être relativement complexe. Corrélativement, la forme à donner à un panneau structural et/ou acoustique pour structure fixe interne de nacelle, notamment, peut être relativement complexe.

L'assemblage d'un panneau structural et/ou acoustique à surface non plane et/ou de forme relativement complexe peut nécessiter de finaliser la forme d'une peau, préalablement à l'assemblage de cette peau avec la structure alvéolaire correspondante. Pour ce faire, il est connu de former la peau à chaud sous pression gazeuse, la pression permettant de plaquer la peau contre la structure alvéolaire dont elle prend la forme sous l'effet de la température.

Un tel formage et/ou un assemblage à chaud sous pression gazeuse peut se traduire par un écrasement local de la structure alvéolaire. En effet, la partie centrale de la peau se déforme plus vite que ses extrémités si bien que la structure alvéolaire est soumise à des contraintes mécaniques non uniformes dans l'espace, c'est-à-dire à un effort de poussée de la peau contre la structure alvéolaire plus important au niveau de la partie centrale de la peau qu'au niveau de ses extrémités.

L'hydroformage à froid est une solution alternative qui présente d'autres inconvénients, tels que les risques de fuites d'eau et d'éclatement de la vessie ou de la pièce. Cette technique est en outre difficilement applicable à l'échelle industrielle et ne permet pas le formage de formes complexes.

Le document US 5 705 794 décrit un procédé combinant plusieurs opérations de fabrication dans une cellule de travail à chauffage par induction.

L'invention vise à résoudre tout ou partie des inconvénients liés aux techniques connues de fabrication de panneau structural et/ou acoustique pour nacelle.

A cet effet, l'invention se rapporte à un procédé de fabrication d'un panneau structural et/ou acoustique pour nacelle d'ensemble propulsif d'aéronef. Le panneau structural et/ou acoustique comprend deux peaux métalliques et une structure alvéolaire métallique, par exemple en titane. De préférence, la structure alvéolaire peut être du type nid d'abeille. Le procédé comprend une disposition de l'une des deux peaux, dite peau de travail, de sorte que la peau de travail délimite un premier volume et un deuxième volume d'une enceinte. Le procédé comprend aussi une disposition de la structure alvéolaire dans le deuxième volume de l'enceinte. Selon l'invention, le procédé comprend en outre une étape d'assemblage dans laquelle on chauffe par rayonnement électromagnétique infrarouge la peau de travail de manière à assembler la peau de travail et la structure alvéolaire par brasage ou soudage diffusion. Selon une alternative non revendiquée, ce rayonnement peut être laser.

Un tel procédé permet de chauffer sélectivement les éléments à assembler, grâce à la directivité du rayonnement électromagnétique. On peut ainsi chauffer de manière sélective la peau de travail en limitant ou annulant la montée en température de l'outillage.

La directivité du chauffage permet aussi de simplifier les moyens d'étanchéité grâce à la conservation de zones relativement froides. On peut ainsi assurer l'étanchéité de l'enceinte par des joints en caoutchouc.

Par rapport aux techniques de chauffage par résistances électriques, le procédé selon l'invention permet de réduire la durée de fabrication du panneau structural et/ou acoustique et d'éviter l'utilisation d'une cloche thermique.

De préférence, le procédé peut comprendre en outre une mise sous pression gazeuse du premier volume de l'enceinte de manière à plaquer et maintenir la peau de travail contre la structure alvéolaire.

Dans un mode de réalisation, le procédé peut comprendre en outre, avant l'étape d'assemblage, une étape de formage dans laquelle on chauffe par rayonnement électromagnétique la peau de travail de manière à conformer la peau de travail à la structure alvéolaire, le premier volume de l'enceinte étant mis sous pression par un gaz pendant cette étape de formage. Le rayonnement électromagnétique peut être infrarouge ou laser et peut de préférence être réalisé par un moyen de chauffage commun pour cette étape de formage et pour ladite étape de d'assemblage.

Dans un mode de réalisation, le chauffage par rayonnement électromagnétique lors de l'étape de formage peut être réalisé par chauffage sélectif de la peau de travail depuis des extrémités jusqu'à un centre de cette peau de travail, de manière à uniformiser sa déformation au cours de l'étape de formage.

Une étape de formage ainsi réalisée permet notamment d'obtenir une épaisseur de peau plus homogène et, pour certains matériaux comme l'inconel 625, d'éviter un phénomène de striction.

De plus, une étape de formage ainsi réalisée permet d'éviter ou de limiter le phénomène d'écrasement de la structure alvéolaire au niveau de la partie centrale de la peau de travail, relativement aux techniques de formage à chaud sous pression gazeuse de l'art antérieur, tout en évitant de recourir aux techniques d'hydroformage à froid.

De préférence, le procédé peut comprendre en outre une mise sous vide du deuxième volume de l'enceinte à l'aide d'un moyen de pompage.

Dans un mode de réalisation, le procédé peut comprendre une mise sous vide du premier volume de l'enceinte à l'aide d'un moyen de pompage, avant mise sous pression gazeuse du premier volume de l'enceinte.

La mise sous vide permet d'éviter l'oxydation des éléments à assembler et, en cas d'assemblage par brasage, améliore l'étalement de la brasure et des propriétés mécaniques du panneau structural et/ou acoustique.

Par rapport à un four sous vide de l'état de la technique antérieure, ledit premier volume et ledit deuxième volume ont chacun un volume plus petit, ce qui diminue le temps de pompage.

L'invention concerne aussi un dispositif de fabrication d'un panneau structural et/ou acoustique pour nacelle d'ensemble propulsif d'aéronef, le panneau structural et/ou acoustique comprenant deux peaux métalliques et une structure alvéolaire métallique, par exemple en titane. De préférence, la structure alvéolaire peut être du type nid d'abeille. Ce dispositif comprend une enceinte apte à recevoir l'une des deux peaux, dite peau de travail, de sorte que la peau de travail délimite un premier volume et un deuxième volume de l'enceinte. L'enceinte est apte à recevoir la structure alvéolaire dans le deuxième volume. Selon l'invention, ce dispositif comprend en outre un moyen de chauffage agencé pour chauffer la peau de travail par rayonnement électromagnétique infrarouge de manière à assembler la peau de travail et la structure alvéolaire par brasage ou soudage diffusion lors d'une étape d'assemblage. Selon une alternative non revendiquée, ce rayonnement peut être laser.

Dans un mode de réalisation, le dispositif peut comprendre en outre un moyen de mise sous pression du premier volume de l'enceinte par un gaz, ce moyen de mise sous pression étant apte à plaquer et maintenir la peau de travail contre la structure alvéolaire.

Dans un mode de réalisation, le moyen de chauffage peut en outre être agencé pour chauffer la peau de travail par rayonnement électromagnétique de manière à conformer la peau de travail à la structure alvéolaire lors d'une étape de formage précédant l'étape d'assemblage. Dans ce mode de réalisation, le dispositif peut être agencé pour mettre le premier volume de l'enceinte sous pression pendant l'étape de formage.

De préférence, le moyen de chauffage peut être agencé pour chauffer, lors de l'étape de formage, la peau de travail par rayonnement électromagnétique de manière sélective depuis des extrémités jusqu'à un centre de cette peau de travail, de manière à uniformiser sa déformation au cours de l'étape de formage.

Dans un mode de réalisation, le dispositif peut comprendre un moyen de pompage agencé pour mettre le premier volume et/ou deuxième volume de l'enceinte sous vide.

Les avantages conférés par le procédé selon l'invention se retrouvent aussi dans le dispositif selon l'invention.

D'autres caractéristiques et avantages de l'invention apparaîtront à la lecture de la description nullement limitative qui suit et des figures annexées, dans lesquelles :
- La figure 1 est une vue schématique d'une nacelle de turboréacteur d'aéronef ;
- La figure 2 illustre une buse d'éjection de tuyère d'éjection de nacelle de turboréacteur d'aéronef ;
- La figure 3 illustre une structure fixe interne de nacelle de turboréacteur d'aéronef, sous la forme de deux demi-tonneaux avec leurs îlots 12H et 6H ;
- Les figures 4 à 7 illustrent des dispositifs selon l'invention adaptés à la fabrication de panneaux de différentes formes ;
- La figure 8 illustre un moyen de chauffage mis en oeuvre dans un dispositif selon l'invention.

Les éléments identiques ou similaires sont repérés par des signes de référence identiques sur l'ensemble des figures.

L'invention se rapporte à un procédé et un dispositif de fabrication d'un panneau structural et/ou acoustique pour une nacelle d'ensemble propulsif d'aéronef.

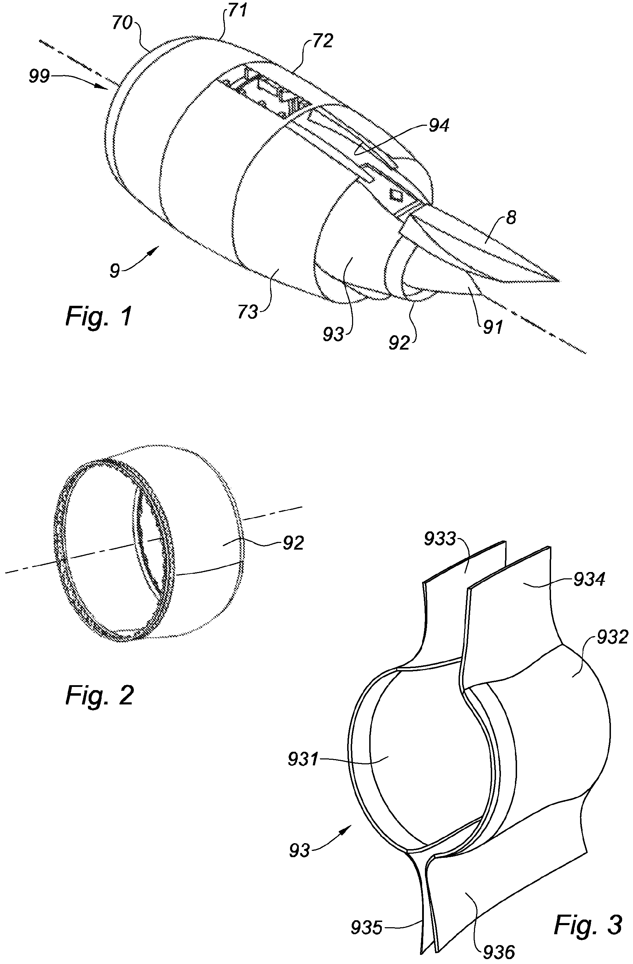

Un exemple de nacelle 9 est illustré à la figure 1. Cette nacelle 9 est suspendue à un pylône 8 destiné à être fixé à une aile (non représentée) d'un aéronef (non représenté). La nacelle 9 comprend une section amont 71 dotée d'une lèvre 70 formant une entrée d'air 99, une section médiane 72 recevant une soufflante (non représentée) d'un turboréacteur (non représenté) à double flux, et une section aval 73.

La section aval 73 comporte une structure interne fixe 93 entourant une partie amont du turboréacteur (non représenté) et une structure externe fixe 94. La structure interne fixe 93 et la structure externe fixe 94 délimitent une veine annulaire définissant un passage pour un flux d'air principal pénétrant la nacelle 9 au niveau de l'entrée d'air 99.

La nacelle 9 comprend une tuyère d'éjection comportant un cône d'éjection de gaz 91 (« plug » en anglais) et une buse d'éjection 92 (« nozzle » en anglais). Une buse d'éjection 92 est représentée à la figure 2. Le cône d'éjection 91 et la buse d'éjection 92 de la tuyère d'éjection définissent un passage pour un flux d'air chaud sortant du turboréacteur (non représenté).

La figure 3 montre deux pièces 931 et 932 de la structure fixe interne 93. Les pièces 931 et 932 ont une forme de demi-tonneau de sorte que, une fois assemblées, elles confèrent à la structure fixe interne 93 une forme de tonneau.

La structure fixe interne 93 comprend aussi des pièces 933, 934, 935, 936 pour assurer une liaison structurelle entre la structure fixe interne 93 et la structure externe fixe 94. Les pièces 933 et 934 constituent un îlot dit 12H placé au-dessus verticalement du tonneau. Les pièces 935 et 936 constituent un îlot dit 6H placé en-dessous verticalement du tonneau.

L'invention vise la fabrication de panneaux structuraux et/ou acoustiques notamment pour une buse d'éjection 92 de tuyère d'éjection telle qu'illustrée en figure 2, pour une structure fixe interne 93 telle qu'illustrée en figure 3, ou pour toute autre pièce de la nacelle 9.

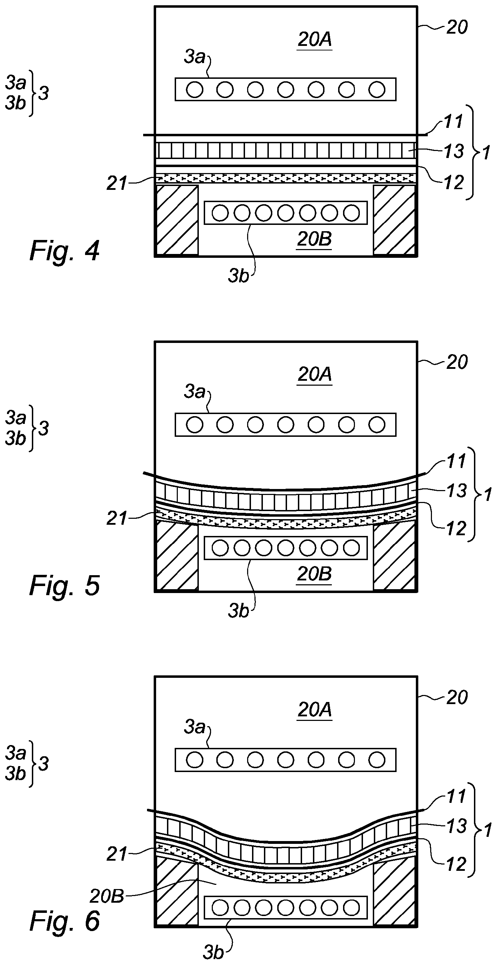

Un panneau acoustique 1 est illustré notamment en figure 4 qui montre un dispositif selon l'invention. Le panneau acoustique 1 comprend deux peaux 11 et 12 métalliques et une structure alvéolaire 13 métallique du type nid d'abeille. A titre d'exemple non limitatif, les éléments 11, 12 et 13 peuvent être réalisés dans un même matériau tel que le titane. Alternativement, les éléments 11, 12 et 13 peuvent être réalisés dans des matériaux différents : par exemple, les éléments 11 et 12 peuvent être réalisés dans un premier matériau métallique et l'élément 13 peut être réalisé dans un deuxième matériau métallique ; ou encore, les éléments 11, 12 et 13 peuvent être réalisés respectivement dans un premier, un deuxième et un troisième matériau.

Les exemples des figures 4 à 7 illustrent un assemblage simultané des éléments 11, 12 et 13. L'invention permet toutefois d'assembler ces éléments séparément, par exemple uniquement les éléments 11 et 13.

Le dispositif selon l'invention comprend une enceinte 20 apte à recevoir l'une au moins des deux peaux, dite peau de travail 11, de sorte que la peau de travail 11 délimite un premier volume 20A et un deuxième volume 20B de l'enceinte 20. Cette délimitation peut être obtenue par pincement de la peau de travail 11 entre des zones de pincement (non représentées) de l'enceinte 20.

L'enceinte 20 est en outre apte à recevoir la structure alvéolaire 13 dans le deuxième volume 20B. Dans les exemples des figures 4 à 6, le deuxième volume 20B de l'enceinte 20 reçoit à la fois la structure alvéolaire 13 ainsi que la peau 12.

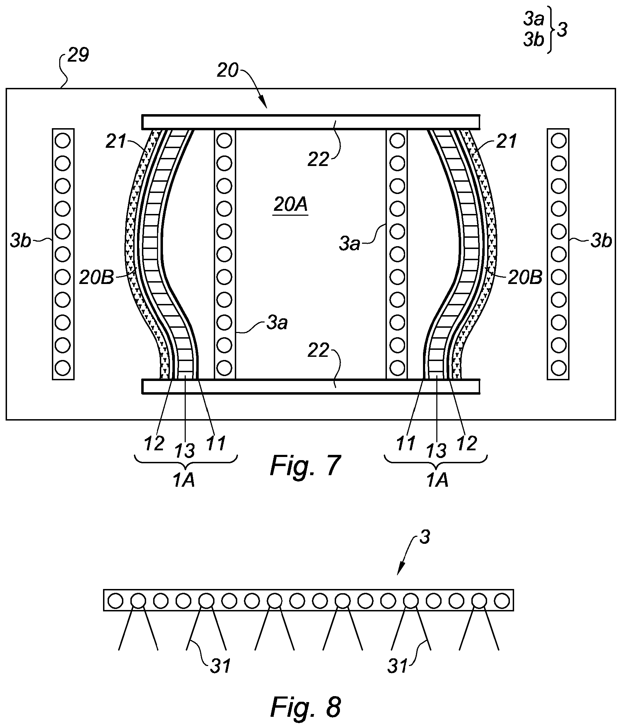

Le dispositif selon l'invention comprend un moyen de chauffage 3 représenté séparément à la figure 8. Le moyen de chauffage 3 est agencé pour produire un rayonnement électromagnétique 31 infrarouge, ou laser selon une alternative non revendiquée.

En référence à la figure 4, le moyen de chauffage 3 comprend un moyen de chauffage 3a agencé pour chauffer la peau de travail 11 par rayonnement électromagnétique infrarouge de manière à assembler la peau de travail 11 et la structure alvéolaire 13 par brasage ou soudage diffusion lors d'une étape d'assemblage. Pour ce faire, le moyen de chauffage 3a est placé dans le premier volume 20A de l'enceinte 20. Autrement dit, le procédé selon l'invention comprend une telle étape d'assemblage dans laquelle on chauffe par rayonnement électromagnétique 31 infrarouge la peau de travail 11 de manière à assembler la peau de travail 11 et la structure alvéolaire 13 par brasage ou soudage diffusion.

Dans cet exemple, le moyen de chauffage 3 comprend aussi un moyen de chauffage 3b. Lors de l'étape d'assemblage, on chauffe aussi par rayonnement électromagnétique 31 infrarouge, à l'aide du moyen de chauffage 3b, un outillage 21 sur lequel repose la peau 12. Cela permet d'améliorer l'assemblage du panneau et notamment de la peau 12 avec la structure alvéolaire 13. Le chauffage de l'outillage 21 est toutefois optionnel.

De préférence, le premier volume 20A de l'enceinte 20 est mis sous pression gazeuse de manière à plaquer et maintenir la peau de travail 11 contre la structure alvéolaire 13 et le cas échéant la structure alvéolaire 13 contre la peau 12.

Dans cet exemple, la peau 12 est rendue perméable à l'air par exemple à l'aide de perçages (non représentés). La mise sous vide est donc aussi obtenue au sein de la structure alvéolaire 13.

Dans l'exemple de la figure 4, les éléments 11, 12 et 13 sont planes et forment, après assemblage, un panneau plane.

Il ressort des exemples des figures 2 et 3 que certaines pièces de la nacelle 9 présentent des surfaces non planes et/ou de forme relativement complexe. Les panneaux acoustiques équipant ou formant de telles pièces doivent donc présenter de telles surfaces non planes et/ou de forme relativement complexe ce qui peut nécessiter de finaliser le formage d'une peau avant son assemblage avec la structure alvéolaire préformée.

Les figures 5 à 7 montrent des dispositifs comprenant des éléments à assembler non planes auxquels on se réfère dans ce qui suit.

Selon l'invention, une étape de formage peut être réalisée avant l'étape d'assemblage. Lors de cette étape de formage, on chauffe par rayonnement électromagnétique 31, dans l'exemple des figure 5 à 7 à l'aide du moyen de chauffage 3a, la peau de travail 11 de manière à conformer la peau de travail 11 à la structure alvéolaire 13. Lors de cette étape de formage, le premier volume 20A de l'enceinte 20 est mis sous pression gazeuse, ce qui permet de pousser la peau de travail 11 contre la structure alvéolaire 13. Lorsque la peau 12 est présente, cela permet aussi de mieux plaquer la peau 12 sur l'outillage 21 au travers de la structure alvéolaire 13 et de la peau de travail 11.

La peau de travail 11 est donc de préférence une peau pleine, c'est-à-dire non perméable à l'air, pour permettre une mise sous pression différentielle du premier volume 20A et du deuxième volume 20B de l'enceinte 20.

Dans un exemple de réalisation compatible avec les différents modes de réalisation illustrés aux figures 4 à 7, le chauffage par rayonnement électromagnétique lors de l'étape de formage est réalisé par chauffage sélectif de la peau de travail 11 depuis des extrémités jusqu'à un centre de cette peau de travail 11, de manière à uniformiser sa déformation au cours de l'étape de formage.

Dans l'exemple de la figure 6, le panneau acoustique 1 correspond à une demi structure fixe interne telle qu'illustrée à la figure 3, par exemple celle comprenant le demi tonneau 931 et les deux pièces 933 et 935.

Afin d'éviter l'oxydation des éléments à assembler et assurer le contact entre ces éléments, le deuxième volume 20B de l'enceinte 20 peut être mis sous vide à l'aide d'un moyen de pompage pendant le cycle thermique.

Le premier volume 20A de l'enceinte 20 peut aussi être mis sous vide à l'aide d'un moyen de pompage pendant le cycle thermique, dans les modes de réalisation n'impliquant pas de mettre ce premier volume 20A sous pression gazeuse. Dans les modes de réalisation dans lesquels le premier volume 20A est mis sous pression gazeuse, le premier volume 20A peut aussi être mis sous vide à l'aide d'un moyen de pompage avant mise sous pression gazeuse.

A titre d'exemple non limitatif, en référence aux figures 4 à 6, on applique une pression de gaz inerte dans le premier volume 20A et donc sur la peau de travail 11 dès que la température atteint 800°C et cela jusqu'à la fin du cycle thermique. Optionnellement, la pression peut être diminuée après solidification de la brasure.

La figure 7 illustre le cas d'une enceinte 20 agencée pour assembler un panneau acoustique 1a sous la forme d'une pièce de révolution, ce panneau acoustique 1a comprenant la peau de travail 11, la structure alvéolaire 13 et la peau 12. Le panneau acoustique 1a fabriqué selon l'invention peut par exemple constituer une buse d'éjection 92 telle qu'illustrée à la figure 2.

A la différence des modes de réalisation des figures 4 à 6, l'enceinte 20 est délimitée par l'outillage 21 et par des parois 22, cette enceinte 20 pouvant elle-même être placée dans une chambre 29 recevant un moyen de chauffage 3b pour le chauffage de l'outillage 21.

Bien entendu, l'invention n'est pas limitée aux exemples qui viennent d'être décrits et de nombreux aménagements peuvent être apportés à ces exemples. Par exemple, l'invention permet aussi de fabriquer des panneaux structuraux n'ayant pas de fonction de traitement acoustique.

## Revendications

1. Procédé de fabrication d'un panneau structural et/ou acoustique (1) pour nacelle (9) d'ensemble propulsif d'aéronef, le panneau structural et/ou acoustique (1) comprenant deux peaux (11, 12) métalliques et une structure alvéolaire (13) métallique, ce procédé comprenant une disposition de l'une des deux peaux, dite peau de travail (11), de sorte que la peau de travail (11) délimite un premier volume (20A) et un deuxième volume (20B) d'une enceinte (20), et une disposition de la structure alvéolaire (13) dans le deuxième volume (20B) de l'enceinte (20), **caractérisé en ce qu'**il comprend en outre une étape d'assemblage dans laquelle on chauffe par rayonnement électromagnétique (31) infrarouge la peau de travail (11) de manière à assembler la peau de travail (11) et la structure alvéolaire (13) par brasage ou soudage diffusion.

2. Procédé selon la revendication 1, comprenant en outre une mise sous pression gazeuse du premier volume (20A) de l'enceinte (20) de manière à plaquer et maintenir la peau de travail (11) contre la structure alvéolaire (13).

3. Procédé selon la revendication 2, comprenant en outre, avant l'étape d'assemblage, une étape de formage dans laquelle on chauffe par rayonnement électromagnétique (31) la peau de travail (11) de manière à conformer la peau de travail (11) à la structure alvéolaire (13), le premier volume (20A) de l'enceinte (20) étant mis sous pression par un gaz pendant cette étape de formage.

4. Procédé selon la revendication 3, dans lequel le chauffage par rayonnement électromagnétique lors de l'étape de formage est réalisé par chauffage sélectif de la peau de travail (11) depuis des extrémités jusqu'à un centre de cette peau de travail (11), de manière à uniformiser sa déformation au cours de l'étape de formage.

5. Procédé selon l'une quelconque des revendications 1 à 4, comprenant en outre une mise sous vide du premier volume (20A) et/ou du deuxième volume (20B) de l'enceinte (20) à l'aide d'un moyen de pompage.

6. Dispositif de fabrication d'un panneau structural et/ou acoustique (1) pour nacelle (9) d'ensemble propulsif d'aéronef, le panneau structural et/ou acoustique (1) comprenant deux peaux (11, 12) métalliques et une structure alvéolaire (13) métallique, ce dispositif comprenant une enceinte (20) apte à recevoir l'une des deux peaux, dite peau de travail (11), de sorte que la peau de travail (11) délimite un premier volume (20A) et un deuxième volume (20B) de l'enceinte (20), l'enceinte (20) étant apte à recevoir la structure alvéolaire (13) dans le deuxième volume (20B), **caractérisé en ce qu'**il comprend en outre un moyen de chauffage (3) agencé pour chauffer la peau de travail (11) par rayonnement électromagnétique (31) infrarouge de manière à assembler la peau de travail (11) et la structure alvéolaire (13) par brasage ou soudage diffusion lors d'une étape d'assemblage.

## Patentansprüche

1. Verfahren zum Herstellen einer Struktur- und/oder Akustikplatte (1) für eine Gondel (9) einer Antriebseinheit eines Flugzeugs, wobei die Struktur- und/oder Akustikplatte (1) zwei metallische Häute (11, 12) und eine metallische Zellstruktur (13) umfasst, wobei das Verfahren eine Anordnung einer der beiden Häute, die sogenannte Arbeitshaut (11), wobei die Arbeitshaut (11) ein erstes Volumen (20A) und ein zweites Volumen (20B) eines Gehäuses (20) begrenzt, und eine Anordnung der Zellstruktur (13) innerhalb des zweiten Volumens (20B) des Gehäuses (20) umfasst, **dadurch gekennzeichnet, dass** es ferner einen Montageschritt umfasst, in dem die Arbeitshaut (11) durch elektromagnetische Infrarotstrahlung (31) erhitzt wird, um die Arbeitshaut (11) und die Zellstruktur (13) durch Hartlöten oder Diffusionsschweißen zusammenzufügen.

2. Verfahren nach Anspruch 1, das ferner eine Gasdruckbeaufschlagung des ersten Volumens (20A) des Gehäuses (20) umfasst, um die Arbeitshaut (11) gegen die Zellstruktur (13) zu drücken und zu halten.

3. Verfahren nach Anspruch 2, das ferner vor dem Montageschritt einen Formungsschritt umfasst, in dem die Arbeitshaut (11) durch elektromagnetische Strahlung (31) erhitzt wird, um die Arbeitshaut (11) an die Zellstruktur (13) anzupassen, wobei das erste Volumen (20A) des Gehäuses (20) während dieses Formungsschritts durch ein Gas unter Druck gesetzt wird.

4. Verfahren nach Anspruch 3, wobei das Erhitzen durch elektromagnetische Strahlung während des Formungsschritts durch selektives Erhitzen der Arbeitshaut (11) von den Enden bis zur Mitte der Arbeitshaut (11) durchgeführt wird, um ihre Verformung während des Formungsschritts gleichmäßig zu gestalten.

5. Verfahren nach einem der Ansprüche 1 bis 4, das ferner ein Vakuumieren des ersten Volumens (20A) und/oder des zweiten Volumens (20B) des Gehäuses (20) mit Hilfe einer Pumpe umfasst.

6. Vorrichtung zum Herstellen einer Struktur- und/oder Akustikplatte (1) für eine Gondel (9) einer Antriebseinheit eines Flugzeugs, wobei die Struktur- und/oder Akustikplatte (1) zwei metallische Häute (11, 12) und eine metallische Zellstruktur (13) umfasst, wobei die Vorrichtung ein Gehäuse (20) umfasst, das dazu geeignet ist, eine er beiden Häute, die sogenannte Arbeitshaut (11), derart aufzunehmen, dass die Arbeitshaut (11) ein erstes Volumen (20A) und ein zweites Volumen (20B) eines Gehäuses (20) begrenzt, wobei das Gehäuse (20) dazu geeignet ist, die Zellstruktur (13) innerhalb des zweiten Volumens (20B) aufzunehmen, **dadurch gekennzeichnet, dass** sie ferner ein Heizmittel (3) umfasst, das dazu eingerichtet ist, die Arbeitshaut (11) durch elektromagnetische Infrarotstrahlung (31) zu erhitzen, um die Arbeitshaut (11) und die Zellstruktur (13) durch Hartlöten oder Diffusionsschweißen zusammenzufügen.

## Claims

1. A method for manufacturing a structural and/or acoustic panel (1) for a nacelle (9) of an aircraft propulsion unit, the structural and/or acoustic panel (1) comprising two metallic skins (11, 12) and a metallic cellular structure (13), this method comprising an arrangement of one of the two skins, called working skin (11), so that the working skin (11) delimits a first volume (20A) and a second volume (20B) of an enclosure (20), and an arrangement of the cellular structure (13) in the second volume (20B) of the enclosure (20), **characterized in that** it further comprises an assembly step in which the working skin (11) is heated by infrared electromagnetic radiation (31) so as to assemble the working skin (11) and the cellular structure (13) by brazing or diffusion welding.

2. The method according to claim 1, further comprising a gaseous pressurization of the first volume (20A) of the enclosure (20) so as to press and hold the working skin (11) against the cellular structure (13).

3. The method according to claim 2, further comprising, before the assembly step, a forming step in which the working skin (11) is heated by electromagnetic radiation (31) so as to conform the working skin (11) to the cellular structure (13), the first volume (20A) of the enclosure (20) being pressurized by a gas during this forming step.

4. The method according to claim 3, wherein the heating by electromagnetic radiation during the forming step is carried out by selective heating of the working skin (11) from the ends to a center of this working skin (11), so as to standardize its deformation during the forming step.

5. The method according to any one of claims 1 to 4, further comprising an evacuation of the first volume (20A) and/or the second volume (20B) of the enclosure (20) using a pumping means.

6. A device for manufacturing a structural and/or acoustic panel (1) for a nacelle (9) of an aircraft propulsion unit, the structural and/or acoustic panel (1) comprising two metallic skins (11, 12) and a metallic cellular structure (13), this device comprising an enclosure (20) capable of receiving one of the two skins, called working skin (11), so that the working skin (11) delimits a first volume (20A ) and a second volume (20B) of the enclosure (20), the enclosure (20) being capable of receiving the cellular structure (13) in the second volume (20B), **characterized in that** it further comprises a heating means (3) arranged to heat the working skin (11) by infrared electromagnetic radiation (31) so as to assemble the working skin (11) and the cellular structure (13) by brazing or diffusion welding during an assembly step.
